# EUROPEAN PATENT SPECIFICATION

(11) **EP 0 545 560 B1**
(45) Date of publication and mention of the grant of the patent: **21.01.1998**
(21) Application number: 92310206.5
(22) Date of filing: 06.11.1992
(51) Int. Cl.: G01F 11/16, G01F 11/22

(54) **Sampling valve**
Probenentnahmeventil
Vanne pour prélèvement des échantillons

(30) Priority: 20.11.1991 JP 331283/91
(43) Date of publication of application: 09.06.1993
(73) Proprietor: TOA MEDICAL ELECTRONICS CO., LTD., Chuoku, Kobe (JP)
(72) Inventor: Demachi, Takashi, Tarumiku, Kobe (JP); Kuroda, Toshiaki, Takasagoshi, Hyogoken (JP)
(74) Representative: Price, Paul Anthony King

(56) References cited:
- EP-A- 0 136 550
- DE-A- 2 124 999
- DE-A- 2 623 163
- US-A- 3 978 888

## Description

The present invention relates to a sampling valve for sampling a liquid specimen such as blood, and more particularly to a sampling valve for sampling only the portion of the liquid specimen that is needed for analysis or the like.

Apparatus for counting blood corpuscles such as erythrocytes, apparatus for classifying leukocytes, and apparatus for counting reticulocytes are known well. Apparatus combining all of these functions into one multifunctional apparatus is also known. The multifunctional apparatus is capable of measuring multiple characteristics in one sampling operation. Depending on the specimen, however, unnecessary characteristics are also measured, and sample and reagents are wasted.

To eliminate such waste, it is necessary to supply the correct number of samples of each specimen to the analyzer. For example, in the field of biochemical examination, the sampling method is to aspirate an appropriate amount of sample into a pipette, and then to discharge the sample into a reaction vessel. This method is simple but the precision is poor. In particular, it has difficulty handling a highly viscous sample such as blood. Accordingly, in blood cell counting apparatus, the specimen is sampled by aspirating and discharging a rod-like length of the specimen by using a sampling valve.

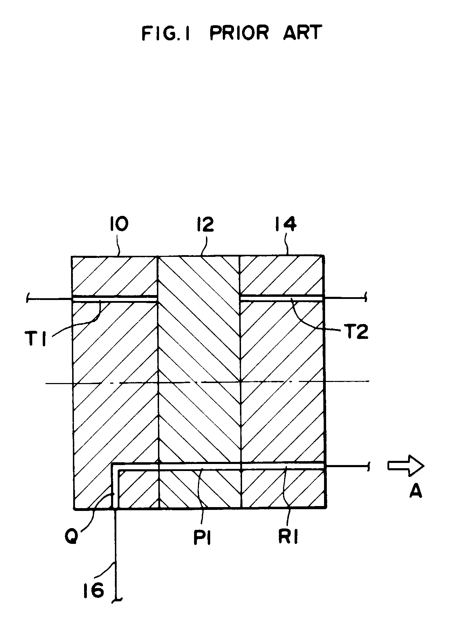

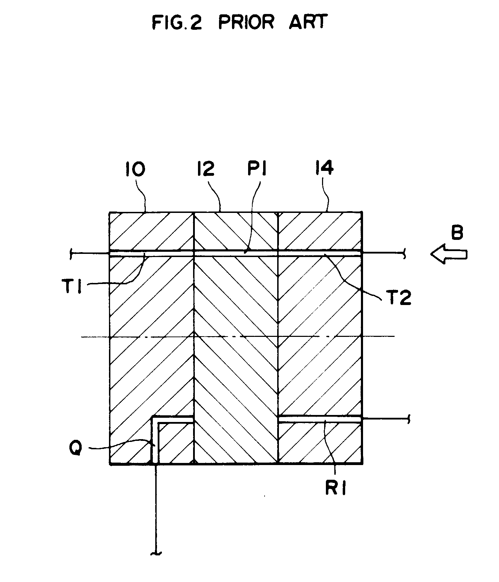

Referring now to Fig. 1 and Fig. 2, the structure and operation of a general sampling valve are briefly described below. Usually, a sampling valve consists of two fixed elements 10, 14 and a movable element 12 enclosed by the fixed elements 10, 14. Fig. 1 and Fig. 2 show two states of the sampling valve. In Fig. 1, the specimen flows in the direction of arrow A, that is, from a pipette 16 to an inlet passage Q, metering (measuring quantity) passage P1, and outlet passage R1, and fills up the metering passage P1 of the movable element 12 (this is called the first state). As the movable element 12 moves from the first state, it moves to the state shown in Fig. 2 (this is called the second state), and the specimen filling up the metering passage P1 in the first state is discharged, and is transferred outside the sampling valve, together with a liquid such as diluent moving in the direction of arrow B from the passage T2 to the passage T1.

US-A-3,978,888 discloses a more sophisticated version of the above-described sampling valve. Its movable element incorporates ten metering passages which, when the movable element is in its first state, are connected in series by relay passages disposed in the fixed elements. Suction is applied to the single outlet passage at the end of the series of metering passages so that ten metered samples are prepared in the ten metering passages. The movable element is then rotated to its second state so that the ten metered samples may be discharged. The sampling valve cannot vary the number of metered samples that are prepared.

According to the present invention, there is provided a sampling valve for sampling a liquid specimen, comprising: two fixed elements; a movable element positioned between and in contact with surfaces of the fixed elements and having a plurality of sample metering passages, the movable element being movable between a first state in which a selected one or combination of the metering passages may be filled with the liquid specimen to form a corresponding number of metered samples of the liquid specimen and a second state in which each metered sample may be discharged from its metering passage and transferred to outside the sampling valve; an inlet passage disposed in one of the fixed elements for supplying the liquid specimen to at least one of the metering passages when the movable element is in its first state; and a plurality of outlet passages disposed in one or both of the fixed elements and arranged to communicate with the metering passages when the movable element is in its first state; wherein the fixed elements include one or more relay passages for connecting together the metering passages when the movable element is in its first state; and wherein the inlet, metering, relay and outlet passages are arranged, when the movable element is in its first state, to define a plurality of sampling routes each including a respective one or combination of the metering passages.

In some embodiments, the plurality of metering passages are connected in series when the movable element is in its first state.

In other embodiments, initially the sampling routes coincide, and then the sampling routes diverge after the inlet passage but before the metering passages.

In some yet further embodiments, initially the sampling routes coincide, and then the sampling routes diverge after the inlet passage and at least one of the metering passages.

In the first state of the movable element, the inlet passage is used to supply the liquid specimen to the sampling valve, and the outlet passages are used to remove excess liquid specimen from the metering passages.

For example, when using the sampling valve of the invention, a pipette is connected to the inlet passage, and suction (aspiration) means is connected to the outlet passages. In the first state, the pipette is dipped into the liquid specimen, and the suction means is operated. At this time, aspiration pressure is applied by the suction means to the outlet passage of a selected one of the sampling routes by using, for example, a changeover valve. This aspiration pressure reaches the inlet passage and pipette through the passages of the selected sampling route, and the specimen is aspirated from the pipette. The specimen fills up each metering passage of the sampling route, thereby to form a metered sample in each metering passage of the sampling route.

By applying the aspiration pressure to different ones of the outlet passages, different sampling routes may be selected. Thus, different metering passages may be filled up. The passages in the sampling valve may be arranged to produce the optimum permutations of metered samples to suit a particular purpose.

When the aspiration of the specimen is over, the sampling valve is moved to its second state, and each sample is discharged and may be transferred to a measurement unit disposed outside the sampling valve. Then, the sampling valve returns to the first state, and each passage is cleaned with a cleaning liquid (syringe liquid) from a cleaning liquid tank.

Non-limiting embodiments of the invention will now be described with reference to the accompanying drawings, in which:-
Fig. 1 is an explanatory sectional view showing a first state of filling a metering passage with specimen in a general conventional sampling valve;
Fig. 2 is an explanatory sectional view showing a second state of discharging and transferring the sample in a general conventional sampling valve;
Fig. 3 is an explanatory sectional view showing an embodiment of a sampling valve of the invention;
Fig. 4 is an explanatory sectional view showing another embodiment of a sampling valve of the invention;
Fig. 5 is an explanatory diagram showing a different embodiment of a sampling valve of the invention;
Fig. 6 is a perspective view showing a first state of filling the metering passages of the sampling valve shown in Fig. 3; and
Fig. 7 is a perspective view showing a second state of discharging and transferring samples from the sampling valve shown in Fig. 3.

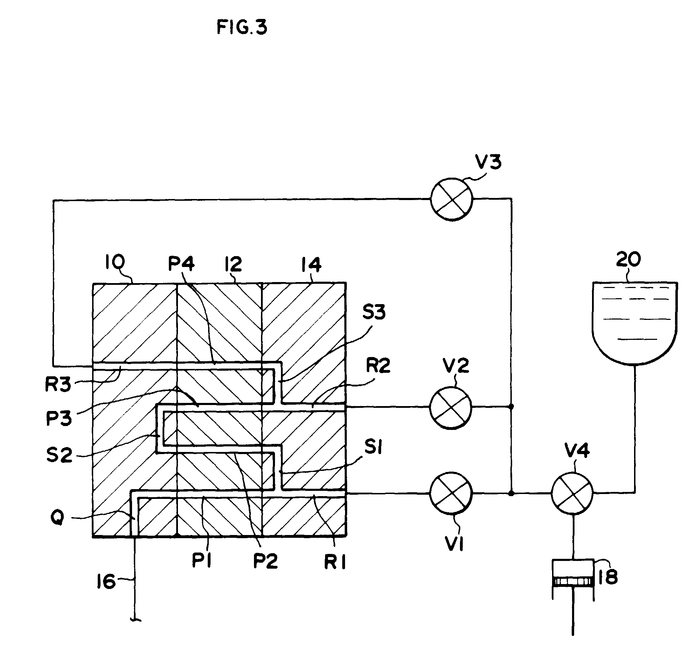

Each of the embodiments of the sampling valves of the invention, as shown in Fig. 3 to Fig. 7, comprises two fixed elements 10, 14 which are stationary, and a movable element 12 positioned between these fixed elements and having a plurality of sample metering passages P. The movable element 12 is movable between a first state in which the metering passages P may be filled with liquid specimen and a second state in which the resulting metered sample(s) may be discharged from the metering passages P.

Each sampling valve also includes:
an inlet passage Q disposed in one of the fixed elements and arranged to supply liquid specimen to at least one of the metering passages P when the movable element is in its first state; and
a plurality of outlet passages R disposed in one or both of the fixed elements and arranged to communicate with the metering passages;
wherein the fixed elements include one or more relay passages S for connecting together the metering passages P; and
wherein the inlet, metering, relay and outlet passages are arranged, when the movable element is in its first state, to define a plurality of sampling routes each including a respective one or combination of the metering passages.

When using the sampling valve, a pipette 16 is connected to the inlet passage Q, and suction (aspiration) means 18 is connected to outlet passages R. In the first state, the pipette 16 is dipped in the liquid specimen, and the suction means 18 is operated. At this time, aspiration pressure is applied by selecting only a certain outlet passage by using, for example, a changeover valve. This aspiration pressure reaches the inlet passage Q and pipette 16 through the specified passage within the sampling valve, and the specimen is aspirated from the pipette 16. The specimen, depending on the connection state of the passages in the sampling valve, flows along a certain sampling route, and each metering passage in that sampling route is filled up. Each sampling route has a particular number of metering passages. Thus, by applying the aspiration pressure to different outlet passages, different numbers of quantitatively measured samples may be prepared in the metering passages.

When the aspiration of the specimen is over, the sampling valve moves to the second state, and each generally rod-like metered sample is discharged from the sampling valve and is transferred to a measurement unit disposed outside the sampling valve. Then, the sampling valve returns to the first state, and each passage is cleaned with a cleaning liquid (syringe liquid) from a cleaning liquid tank 20.

Fig. 3 shows a valve which has four metering passages, and these metering passages P1, P2, P3, P4 are connected in series, and the three sampling routes mutually partly overlap. More specifically, symbol Q denotes an inlet passage, S1, S2, S3 are relay passages, R1, R2, R3 are outlet passages, and the relay passage S1 connects to the outlet passage R1, and the relay passage S3 connects to the outlet passage R2.

When a valve V1 is open, and valves V2, V3 are closed, by changing over a three-way valve V4 so that aspiration means 18 and valve V1 communicate with each other, the sample flows from pipette 16 through passages Q, P1, R1 (the first sampling route), and is measured quantitatively in the passage P1.

When the valve V2 is open, and the valves V1, V3 are closed, the sample flows from the pipette 16 through passages Q, P1, S1, P2, S2, P3, R2 (the second sampling route), and is measured quantitatively in the passages P1, P2, P3.

When the valve V3 is open, and the valves V1, V2 are closed, the sample flows from the pipette 16 through passages Q, P1, S1, P2, S2, P3, S3, P4, R3 (the third sampling route), and is measured quantitatively in the passages P1, P2, P3, P4.

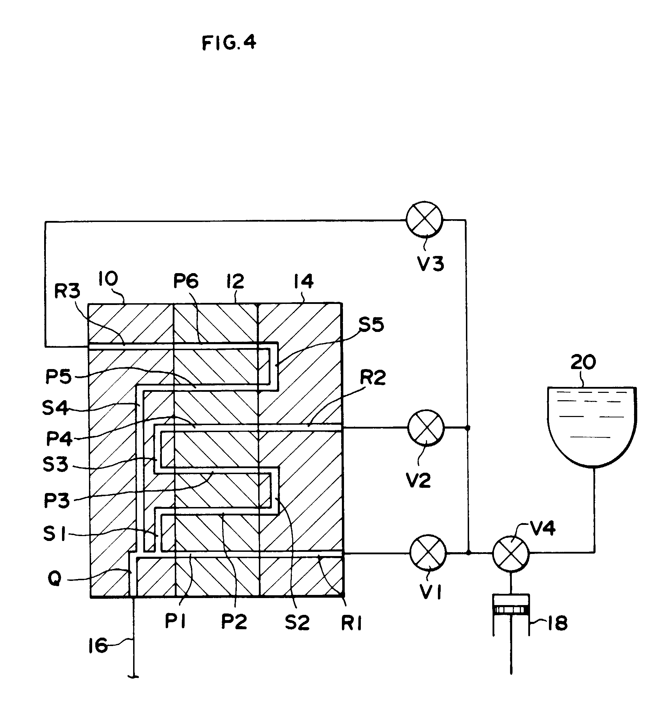

Fig. 4 shows a valve which has six metering passages, and these metering passages P1, P2, P3, P4, P5, P6 are connected in parallel (partly in series, however, in this embodiment), and three sampling routes are provided in parallel. More specifically, symbol Q denotes an inlet passage, S1, S2, S3, S4, S5 are relay passages, R1, R2, R3 are outlet passages, and the relay passages S1, S4 are connected to the inlet passage Q. Instead, the relay passage S1 may be connected to the inlet passage Q, and the passage S4 connected to passage S1.

When a valve V1 is open, and valves V2, V3 are closed, by changing over a three-way valve V4 so that aspiration means 18 and valve V1 may communicate with each other, the sample flows from a pipette 16 through passages Q, P1, R1 (the first sampling route), and is measured quantitatively in the passage P1.

When the valve V2 is open, and the valves V1, V3 are closed, the sample flows from the pipette 16 through passages Q, S1, P2, S2, P3, S3, P4, R2 (the second sampling route), and is measured quantitatively in the passages P2, P3, P4.

When the valve V3 is open, and the valves V1, V2 are closed, the sample flows from the pipette 16 through passages Q, S4, P5, S5, P6, R3 (the third sampling route), and is measured quantitatively in the passages P5, P6.

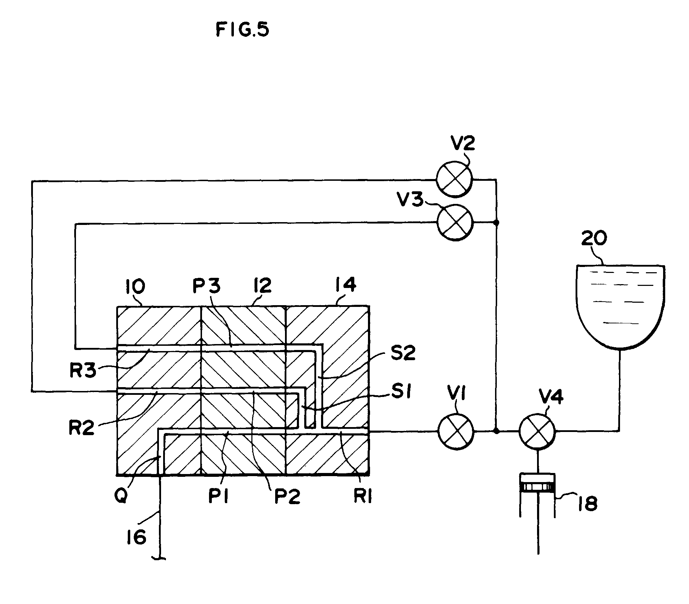

Fig. 5 shows a valve which has three metering passages, and these metering passages P1, P2, P3 are connected in a combination of series and parallel, and the three sampling routes partly overlap and are partly parallel. More specifically, symbol Q denotes an inlet passage, S1, S2 are relay passages, R1, R2, R3 are outlet passages, and the relay passages S1, S2 are connected to the outlet passage R1. Instead, the relay passage S1 may be connected to the outlet passage R1, and the passage S2 connected to passage S1.

When a valve V1 is open, and valves V2, V3 are closed, by changing over a three-way valve V4 so that aspiration means 18 and valve V1 may communicate with each other, the sample flows from a pipette 16 through passages Q, P1, R1 (the first sampling route), and is measured quantitatively in the passage P1.

When the valve V2 is open, and the valves V1, V3 are closed, the sample flows from the pipette 16 through passages Q, P1, S1, P2, R2 (the second sampling route), and is measured quantitatively in the passages P1, P2.

When the valve V3 is open, and the valves V1, V2 are closed, the sample flows from the pipette 16 through passages Q, P1, S2, P3, R3 (the third sampling route), and is measured quantitatively in the passages P1, P3.

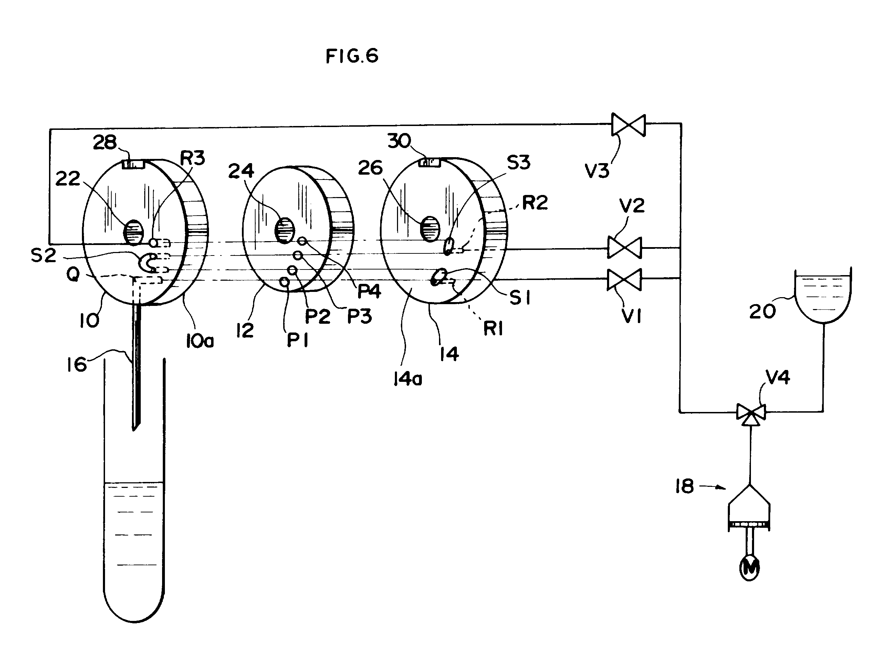

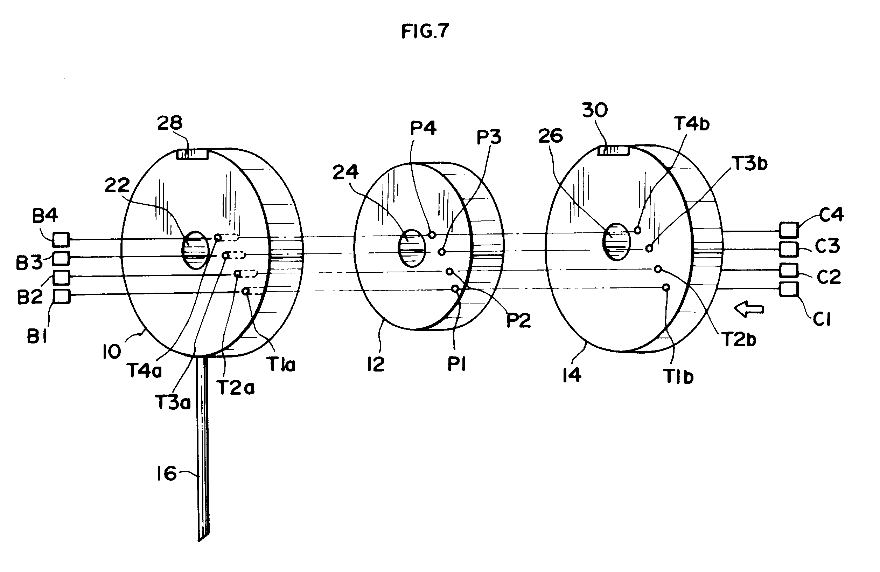

Fig. 6 and Fig. 7 are views of practical examples of the sampling valve shown in Fig. 3. Fig. 6 shows the first state, and Fig. 7 shows the second state. In both Fig. 6 and Fig. 7, the passages are partly omitted. This is for the ease of understanding the drawing and explanation. In Fig. 6, transfer passages T1a, T1b, ..., T4b shown in Fig. 7 are omitted (and are omitted in Figs. 3, 4, 5), and in Fig. 7 the passages Q, S1, S2, S3, R1, R2, R3 shown in Fig. 6 are omitted.

Referring first to Fig. 6, specimen aspiration will be explained. Fixed elements 10, 14 and movable element 12 comprise disc-like bodies. In the center of elements 10, 12, 14, through holes 22, 24, 26 are formed, and a shaft (not shown) passes through the through holes 22, 24, 26. At the upper side of the fixed elements 10, 14, notches 28, 30 are provided, in which a support (not shown) is fitted. The movable element 12 is held between the fixed elements 10, 14 and rotates through a specific angle. The means for keeping the fixed elements 10, 14 in static state and moving the movable element by a specific extent while contacting the surfaces of the fixed elements is known (see, for example, Japanese Laid-open Patent Hei. 1-138421). The mutually contacting surfaces of the elements 10, 12, 14 are planar and polished to an extremely high precision.

The movable element 12 is, for example, provided with four passages P1, P2, P3, P4 for sampling (measuring quantitatively) the specimen. The metering passages P1, P2, P3, P4 are passages penetrating through the movable element 12.

At the lower side of the fixed element 10, a pipe-shaped pipette 16 is attached. The pipette 16 communicates with an inlet passage Q having an L-shape and an opening in the polished side surface 10a of the fixed element 10. Instead of the pipette 16, a fine pipe like a syringe needle may be connected through a tube to form a specimen aspiration part. The passage Q communicates with the metering passage P1. In the polished surface 14a of the fixed element 14, groove-shaped relay passages S1, 53 are provided. The fixed element 10 includes a loop-shaped relay passage S2 which is formed outside the disc-like body of the fixed element 10. The relay passage S1 connects the metering passages P1 and P2, the relay passage S2 connects the metering passages P2 and P3, and the relay passage S3 connects the metering passages P3 and P4. That is, the relay passages S1, S2, S3 connect plural metering passages in series. In portions of the relay passages S1, S3, outlet passages R1, R2, penetrating through the fixed element 14, are provided. In the fixed element 10, an outlet passage R3 connecting to the metering passage P4 is provided. The outlet passage R3 penetrates through the fixed element 10.

Numeral 18 is aspiration means, which is, for example, a syringe capable of generating an aspiration pressure and discharging the cleaning liquid. Numeral 20 is a cleaning liquid (diluent liquid) tank filled with liquid for cleaning (dilution). A three-way valve V4 connects the aspiration means 18 to the sampling valve or the cleaning liquid tank. Two-way valves V1, V2, V3 are disposed between the syringe 18 and outlet passages R1, R2, R3, and select the route. The cleaning liquid is also used as diluent liquid.

Thus, in the sampling valve, three sampling routes are formed. The first sampling route has the inlet passage Q as the inlet and outlet passage R1 as the outlet. The second sampling route has the inlet passage Q as the inlet and the outlet passage R2 as the outlet. The third sampling route has the inlet passage Q as the inlet and the outlet passage R3 as the outlet. By opening any one of the valves V1, V2, V3, and closing the others, one of the three sampling routes may be selected.

Next is explained the sample transfer by reference to Fig. 7. From the first state of Fig. 6, the movable element 12 rotates by a specific angle to the second state of Fig. 7. In the fixed element 10, transfer passages T1a, T2a, T3a, T4a penetrating through the fixed element 10 are provided so as to communicate with the metering passages P1, P2, P3, P4, respectively. Also, in the fixed element 14, transfer passages T1b, T2b, T3b, T4b penetrating through the fixed element 14 are provided to communicate with the metering passages P1, P2, P3, P4, similarly. When diluent liquid discharge means C1, C2, C3, C4 are activated, a specific volume of diluent liquid is supplied in the direction of the arrow to each transfer passage T1b, T2b, T3b, T4b. The measured samples in the passages P1, P2, P3, P4 pass along the passages T1a, T2a, T3a, T4a and into measurement units B1, B2, B3, B4 together with the diluent liquid. The diluent liquid discharge means operates in accordance with the selected sampling route. That is, when the first sampling route is selected (a sample is determined quantitatively in the passage P1 only), only the diluent liquid discharge means C1 is activated. When the second sampling route is selected (three samples are determined quantitatively in the passages P1, P2, P3), the diluent liquid discharge means C1, C2, C3 are activated. When the third sampling route is selected (four samples are determined quantitatively in the passages P1, P2, P3, P4), all diluent liquid discharge means C1, C2, C3, C4 are activated.

Cleaning of the passages is explained next by referring to Fig. 6. From the second state of Fig. 7, the movable element 12 reversely rotates by a specific angle to return to the first state of Fig. 6. Cleaning is similar to the sample transfer described above, because the passages are cleaned according to the selected sampling route. That is, when the first sampling route is selected (specimen is remaining in the passages Q, R1), only the valve V1 is opened and the aspiration means 18 acts as aspiration and cleaning means. When the second sampling route is selected (specimen is remaining in the passages Q, S1, S2, R2), only the valve V2 is opened. When the third sampling route is selected (specimen is remaining in the passages Q, S1, S2, S3, R3), only the valve V3 is opened. However, some specimen enters passage S1 when the first sampling route is selected, enters passages R1, S3 when the second sampling route is selected and enters passages R1, R2 when the third sampling route is selected. Therefore, after the first sampling route has been selected, it is preferable to open the valve V2 as well as the valve V1. After the second sampling route or third sampling route has been selected, it is preferable to open the valves V1, V2, V3. Besides, when the valves V1, V2, V3 are opened to flush out the specimen remaining in each passage, cleaning may be done more effectively within a specified time, and at a specified flow rate. For example, after the first sampling route has been selected, the valves V1, V2 are opened and closed alternately repeatedly (however, the opening time of the valve V1 should be set longer). After the second sampling route or third sampling route has been selected, the valves V1, V2, V3 are alternately opened and closed repeatedly (however, the opening time of the valve V2 should be set longer than that of the valves V1, V3 in the case of second sampling route, and the opening time of the valve V3 should be set longer than that of the valves V1, V2 in the case of third sampling route). As the actual cleaning method, various other valve settings may be considered and may be properly selected depending on the actual configuration of the apparatus.

Being thus composed, the embodiments of the invention have the following characteristics.
(1) The plurality of metering passages in the sampling valve form a plurality of sampling routes, so that only a desired number of metered samples are prepared. The sampling valve is then adjusted to permit the metered sample or samples to be discharged via transfer passages.
(2) Since only the necessary number of samples is prepared, only the necessary amount of specimen is used and analyzed. This minimizes the consumption of diluent liquid and reagents used to analyze the samples.

Having described preferred embodiments of the invention with reference to the accompanying drawings, it is to be understood that the invention is not limited to those precise embodiments, and that various changes and modifications may be made by one skilled in the art without departing from the invention.

## Claims

1. A sampling valve for sampling a liquid specimen, comprising:
two fixed elements (10, 14);
a movable element (12) positioned between and in contact with surfaces of the fixed elements and having a plurality of sample metering passages (P), the movable element (12) being movable between a first state in which a selected one or combination of the metering passages (P) may be filled with the liquid specimen to form a corresponding number of metered samples of the liquid specimen and a second state in which each metered sample may be discharged from its metering passage and transferred to outside the sampling valve;
an inlet passage (Q) disposed in one of the fixed elements for supplying the liquid specimen to at least one of the metering passages when the movable element (12) is in its first state; and
a plurality of outlet passages (R) disposed in one or both of the fixed elements (10, 14) and arranged to communicate with the metering passages when the movable element (12) is in its first state;
wherein the fixed elements (10, 14) include one or more relay passages (S) for connecting together the metering passages (P) when the movable element (12) is in its first state; and
wherein the inlet, metering, relay and outlet passages (Q, P, S, R) are arranged, when the movable element (12) is in its first state, to define a plurality of sampling routes each including a respective one or combination of the metering passages (P).

2. A sampling valve according to claim 1, wherein the plurality of metering passages (P) are connected in series when the movable element (12) is in its first state.

3. A sampling valve according to claim 1, wherein initially the sampling routes coincide, and then the sampling routes diverge after the inlet passage (Q) but before the metering passages (P).

4. A sampling valve according to claim 1, wherein initially the sampling routes coincide, and then the sampling routes diverge after the inlet passage (Q) and at least one of the metering passages (P).

5. A sampling valve according to claim 2, wherein the sampling routes comprise a first sampling route which includes one (P1) of the metering passages (P), a second sampling route which includes three (P1-P3) of the metering passages (P) and a third sampling route which includes four (P1-P4) of the metering passages (P).

6. A sampling valve according to claim 3, wherein the sampling routes comprise a first sampling route which includes one (P1) of the metering passages (P), a second sampling route which includes two (P5, P6) of the metering passages (P) and a third sampling route which includes three (P2-P4) of the metering passages (P).

7. A sampling valve according to claim 4, wherein the sampling routes comprise a first sampling route which includes one (P1) of the metering passages (P), a second sampling route which includes said one (P1) and a second one (P2) of the metering passages (P) and a third sampling route which includes said one (P1) and a third one (P3) of the metering passages (P).

## Patentansprüche

1. Probenentnahmeventil zur Entnahme eines flüssigen Probenmaterials mit
zwei ortsfesten Elementen (10, 14)
einem bewegbaren Element (12), das zwischen den und in Berührung mit Oberflächen der ortsfesten Elemente angeordnet ist und mehrere Probendosierungsdurchgänge (P) hat, wobei das bewegbare Element (12) zwischen einem ersten Zustand, in welchem ein ausgewählter oder eine Kombination der Dosierungsdurchgänge (P) mit dem flüssigen Probenmaterial unter Bildung einer entsprechenden Anzahl von dosierten Proben des flüssigen Probenmaterials gefüllt werden kann, und einem zweiten Zustand, in welchem jede dosierte Probe aus ihrem Dosierungsdurchgang abgegeben und nach außerhalb des Probenentnahmeventils überführt werden kann, bewegbar ist,
einem Einlaßdurchgang (Q), der in einem der ortsfesten Elemente angeordnet ist, um das flüssige Probenmaterial wenigstens einem der Dosierungsdurchgänge zuzuführen, wenn sich das bewegbare Element (12) in seinem ersten Zustand befindet, und
mehreren Auslaßdurchgängen (R), die in einem oder beiden der ortsfesten Elemente (10, 14) derart angeordnet sind, daß sie in Verbindung mit den Dosierungsdurchlässen stehen, wenn sich das bewegbare Element (12) in seinem ersten Zustand befindet,
wobei die ortsfesten Elemente (10, 14) einen oder mehrere Weiterführungsdurchgänge (S) einschließen, um die Dosierungsdurchgänge (P) miteinander zu verbinden, wenn sich das bewegbare Element (12) in seinem ersten Zustand befindet, und
wobei die Einlaß-, Dosierungs-, Weiterführungs- und Auslaßdurchgänge (Q, P, S, R) so angeordnet sind, daß sie, wenn sich das bewegbare Element (12) in seinem ersten Zustand befindet, mehrere Probenentnahmewege definieren, von denen jeder einen oder eine Kombination der Dosierungsdurchgänge (P) einschließt.

2. Probenentnahmeventil nach Anspruch 1, bei dem die mehreren Dosierungsdurchgänge (P) in Reihe verbunden sind, wenn sich das bewegbare Element (12) in seinem ersten Zustand befindet.

3. Probenentnahmeventil nach Anspruch 1, bei dem die Probenentnahmewege anfangs zusammenfallen und dann nach dem Einlaßdurchgang (Q), aber vor den Dosierungsdurchgängen (P), divergieren.

4. Probenentnahmeventil nach Anspruch 1, bei dem die Probenentnahmewege anfangs zusammenfallen und dann nach dem Einlaßdurchgang (Q) und wenigstens einem der Dosierungsdurchgänge (P) divergieren.

5. Probenentnahmeventil nach Anspruch 2, bei dem die Probenentnahmewege einen ersten Probenentnahmeweg, welcher einen (P1) der Dosierungsdurchgänge (P) einschließt, einen zweiten Probenentnahmeweg, welcher drei (P1 - P3) der Dosierungsdurchgänge (P) einschließt, und einen dritten Probeentnahmeweg, welcher vier (P1 - P4) der Dosierungsdurchgänge (P) einschließt, umfassen.

6. Probenentnahmeventil nach Anspruch 3, bei dem die Probenentnahmewege einen ersten Probenentnahmeweg, welcher einen (P1) der Dosierungsdurchgänge (P) einschließt, einen zweiten Probenentnahmeweg, welcher zwei (P5, P6) der Dosierungsdurchgänge (P) einschließt, und einen dritten Probenentnahmeweg, der drei (P2 - P4) der Dosierungsdurchgänge (P) einschließt, umfassen.

7. Probenentnahmeventil nach Anspruch 4, bei dem die Probenentnahmewege einen ersten Probenentnahmeweg, welcher einen (P1) der Dosierungsdurchgänge (P) einschließt, einen zweiten Probenentnahmeweg, welcher den einen (P1) und einen zweiten (P2) der Dosierungsdurchgänge (P) einschiießt, und einen dritten Probenentnahmeweg, welcher den einen (P1) und einen dritten (P3) der Dosierungsdurchgänge (P) einschließt, umfassen.

## Revendications

1. Vanne d'échantillonnage pour échantillonner un spécimen de liquide, comprenant :
deux éléments fixes (10, 14) ;
un élément mobile (12) positionné entre les surfaces des éléments fixes et en contact avec lesdites surfaces et comportant une pluralité de passages de mesure d'échantillons (P), l'élément mobile (12) étant adapté à un déplacement entre une première condition dans laquelle un passage de mesure ou un ensemble de passages de mesure sélectionnés (P) peuvent être remplis du spécimen liquide pour former un nombre correspondant d'échantillons de mesure de spécimen de liquide et une seconde condition dans laquelle chaque échantillon mesuré peut être déchargé de son passage de mesure et transféré jusqu'à l'extérieur de la vanne d'échantillonnage ;
un passage d'entrée (Q) disposé dans un des éléments fixes pour distribuer le spécimen de liquide à au moins un des passages de mesure lorsque l'élément mobile (12) se trouve dans sa première condition ; et
une pluralité de passages de sortie (R) disposés dans un des éléments fixes (10, 14), ou dans les deux éléments, et agencés pour communiquer avec les passages de mesure lorsque l'élément mobile (12) se trouve dans sa première condition ;
dans laquelle les éléments fixes (10, 14) comprennent un ou plusieurs passages de relais (S) pour relier les passages de mesure (P) les uns aux autres lorsque l'élément mobile (12) se trouve dans sa première condition ; et
dans laquelle les passages d'entrée, de mesure, de relais et de sortie (Q, P, S, R) sont agencés, lorsque l'élément mobile (12) se trouve dans sa première condition, pour former une pluralité de voies d'échantillonnage comportant chacune un passage ou un ensemble de passages de mesure (P) respectifs.

2. Vanne d'échantillonnage selon la revendication 1, dans laquelle la pluralité de passages de mesure (P) sont reliés en série lorsque l'élément mobile (12) se trouve dans sa première condition.

3. Vanne d'échantillonnage selon la revendication 1, dans laquelle les voies d'échantillonnage coïncident initialement, puis les voies d'échantillonnage divergent après le passage d'entrée (Q) mais avant les passages de mesure (P).

4. Vanne d'échantillonnage selon la revendication 1, dans laquelle les voies d'échantillonnage coïncident initialement, puis les voies d'échantillonnage divergent après le passage d'entrée (Q) et au moins d'un des passages de mesure (P).

5. Vanne d'échantillonnage selon la revendication 2, dans laquelle les voies d'échantillonnage comprennent une première voie d'échantillonnage qui comprend un (P1) des passages de mesure (P), une deuxième voie d'échantillonnage qui comprend trois (P1 à P3) des passages de mesure (P) et une troisième voie d'échantillonnage qui comprend quatre (P1 à P4) des passages de mesure (P).

6. Vanne d'échantillonnage selon la revendication 3, dans laquelle les voies d'échantillonnage comprennent une première voie d'échantillonnage qui comprend un (P1) des passages de mesure (P), une deuxième voie d'échantillonnage qui comprend deux (P5, P6) des passages de mesure (P) et une troisième voie d'échantillonnage qui comprend trois (P2 à P4) des passages de mesure (P).

7. Vanne d'échantillonnage selon la revendication 4, dans laquelle les voies d'échantillonnage comprennent une première voie d'échantillonnage qui comprend un (P1) des passages de mesure (P), une deuxième voie d'échantillonnage qui comprend ledit un (P1) des passages de mesure et un deuxième (P2) des passages de mesure (P) et une troisième voie d'échantillonnage qui comprend ledit un (P1) des passages de mesure et un troisième (P3) des passages de mesure (P).
